# EUROPÄISCHE PATENTSCHRIFT

(11) **EP 1 301 567 B1**
(45) Veröffentlichungstag und Bekanntmachung des Hinweises auf die Patenterteilung: **10.11.2004**
(21) Anmeldenummer: 01978250.7
(22) Anmeldetag: 18.07.2001
(51) Int. Cl.: C08L 23/04

(54) **VERNETZBARE, HALOGENFREI FLAMMGESCHÜTZTE KUNSTSTOFFMISCHUNG, INSBESONDERE FÜR KABEL**
CROSS-LINKABLE, HALOGEN-FREE FLAME-RESISTANT PLASTIC MIXTURE, ESPECIALLY FOR CABLES
MELANGE DE PLASTIQUES RETICULABLE, SANS HALOGENES, IGNIFUGE, PARTICULIEREMENT DESTINE A DES CABLES

(30) Priorität: 20.07.2000 DE 10035647
(43) Veröffentlichungstag der Anmeldung: 16.04.2003
(73) Patentinhaber: Kromberg & Schubert, D-42389 Wuppertal (DE); Martinswerk GmbH, 50127 Bergheim (DE)
(72) Erfinder: PAUL, Heinz, 46539 Dinslaken (DE); HERBIET, René, B-4700 Eupen (BE); EICHLER, Hans, Jürgen, 50189 Elsdorf-Oberembt (DE); JODOCY, Guido, B-4770 Amel (BE); TOEDT, Winfried, 50823 Köln (DE)
(74) Vertreter: Ludewig, Karlheinrich, Dipl.-Ing.
(86) Internationale Anmeldenummer: PCT/EP2001/008266
(87) Internationale Veröffentlichungsnummer: WO 2002/008331

(56) Entgegenhaltungen:
- EP-A- 0 546 841
- "LOW-SMOKE SELF-EXTINGUISHING ELECTRICAL CABLE AND FLAME-RETARDANT COMPOSITION USED THEREIN" RESEARCH DISCLOSURE, KENNETH MASON PUBLICATIONS, HAMPSHIRE, GB, Nr. 407, 1. März 1998 (1998-03-01), Seiten 245-262, XP000773863 ISSN: 0374-4353

## Beschreibung

Die Erfindung richtet sich auf eine vernetzbare, halogenfrei flammgeschützte Kunststoffmischung, insbesondere für eine Anwendung im Automobilkabelbereich.

Bisher werden im Automobilkabelbereich vornehmlich PVC-Kabelisolierungen oder halogenhaltige, meist mit organischen Bromverbindungen flammgeschützte polyolefinische Compounds eingesetzt. Im Zuge der Umweltdiskussion zum Thema PVC, aber auch hinsichtlich halogenhaltiger Flammschutzmittel, geraten solche Isolationswerkstoffe mehr und mehr unter Druck. So sieht beispielsweise die EU-Richtlinie über Altfahrzeuge vor, daß ab dem 01.01.2006 80% eines Altfahrzeuges recycelt werden müssen. Für Automobilkabel ist es daher vorteilhaft, wenn die Kabelisolierungen z.B. im Falle einer thermischen Verwertung, keine giftigen und/oder korrosiven Bestandteile, wie z.B. Halogenverbindungen, enthalten.

Ein weiterer Nachteil für PVC-Isolierungen ist ferner, daß aufgrund einer immer kompakteren Bauweise unter der Motorhaube die Anforderungen an die Temperaturbeständigkeit wachsen. So wird z.B. eine Gebrauchstemperaturklasse von 125 °C oder gar 150 °C gefordert, die mit PVC-Umhüllungen nicht zu realisieren ist. Bei Temperaturen bis 125 °C kommen heute vernetzte PE-Compounds zum Einsatz. Um die Flammschutzanforderungen der Automobilhersteller zu erfüllen, weisen diese Compounds allerdings den Nachteil auf, daß sie halogenhaltige Verbindungen, meist auf Brombasis, enthalten. Zwar existieren heute schon halogenfreie Lösungen. So wird in der US-A-5,561,185 eine flammwidrige Kunstsoffmischung beschrieben, die 20 bis 60 Gewichtsprozent eines Polypropylens, 1 bis 20 Gewichtsprozent eines durch eine ungesättigte Carboxylsäure oder deren Derivate modifizierten Polyethylens, 25 bis 65 Gewichtsprozent eines Metallhydrats und einen Anteil eines Ethylen-Copolymers enthält.

Derartige Kunststoffmischungen sind bereits bekannt. So ist in der EP 0 871 181 A1 eine Kunststoffmischung beschrieben die aus 5 bis 85 Gewichtsprozent (alle Angaben bezogen auf die Kunststoffkomponente) Ethylen mit einem Copolymer besteht, wobei der Copolymer-Anteil zwischen 10 und 30 Gewichtsprozent liegt, 5 bis 85 Gewichtsprozent LLDPE, 5 bis 85 Gewichtsprozent eines Polyolefins der Gruppe HDPE oder PP und 5 bis 85 Gewichtsprozent einer ungesättigten Carboxylsäure oder eines, durch ein Derivat einer ungesättigten Carboxylsäure modifizierten Olefins enthält. Die Summe der Anteile der vorgenannten Mischung soll dabei 100 Gewichtsprozent betragen. Der dort beschriebenen Kunststoffmischung werden ferner noch 40 bis 150 Gewichtsprozent eines Metallhydroxids als Füllstoff zugegeben.

Aus der EP 0 546 841 A1 ist des Weiteren eine abriebfeste Kunststoffmischung bekannt, die bezogen auf 100 Gewichtsanteile der Polymerkomponente, 50 bis 90 Gew.% eines polyolefinischen Harzes, insbesondere eines hochdichten Polyethylens (HDPE) und 10 bis 50 Gew.% eines polyethylenischen Harzes, insbesondere ein Ethylen/Vinylester-Copolymer enthält. Zur Flammenhemmung ohne Halogene werden 30 bis 200 Gewichtsanteile eines anorganischen Flammenhemmers, insbesondere eine modifizierte Form roten Phosphors eingesetzt. Des Weiteren können, ohne dass die physikalischen Eigenschaften der Zusammensetzung beeinträchtigt werden, Mittel zugesetzt werden, die äußerliche Defekte des Produktes verhindern. Hierunter sind auch Antioxidantien genannt, über deren Stabilisatorwirkung wird jedoch nichts ausgeführt.

Aus der Schrift "Low-smoke self-extinguishing electrical cable and flame-retardant composition used therein" research disclosure, Kenneth Mason Publications, Hampshire, GB, Nr. 407, 1.03.1998, Seiten 245 bis 262, XP 000773863, ISSN: 0374-4353 ist eine flammgeschützte halogenfreie Kunststoffmischung für Kabel bekannt, die beispielsweise aus 60 bis 70% eines Ethylen- bzw. Ethylen-Vinylacetat-Copolymers besteht und 10 bis 20% eines Polyolefins sowie 20% eines Polyethylens niederer Dichte enthält. Zur Verbesserung der mechanischen Eigenschaften und der Flammresistenz werden die Unterschiede von natürlichem Magnesiumhydroxid und synthetischen Magnesiumhydroxid untersucht. Bei diesen Kunststoffmischungen werden Antioxidantien eingesetzt in einem Gewichtsanteil von 0,6 % auf 100 Gewichtsanteile der Kunststoffmischung. Diese geringen Gewichtsanteile an der Antioxidanz-Komponente werden in allen Beispielen unverändert zugesetzt. Der Einfluss dieser Komponente wird nicht untersucht.

Bei den bisher bekannten halogenfreien Kunststoffmischungen für Kabel wird bisher nur eine geringe Abriebsfestigkeit in fertig compoundiertem Zustand erreicht, die die Anforderung insbesonderer betriebsinterner Normen einiger namhafter PKW-Hersteller nicht erreichen. Ferner besteht auch noch das Problem einer nicht ausreichenden Flammwidrigkeit bei diesen Kunststoffmischungen.

Der Erfindung liegt daher die Aufgabe zugrunde, eine Kunststoffmischung zur Verfügung zu stellen, die zur Herstellung elektrischer und/oder optischer Kabel und Leitungen geeignet ist, und welche eine den Anforderungen entsprechende, verbesserte Abriebsfestigkeit und Flammwidrigkeit aufweist, insbesondere zur Anwendung in Kraftfahrzeugen.

Diese Aufgabe wird erfindungsgemäß durch die vernetzbare, halogenfrei flammgeschützte Kunststoffmischung gemäß Anspruch 1 erreicht, die zur Herstellung elektrischer und/oder optischer Kabel und Leitungen geeignet ist, umfassend:
die Kunststoff-Komponente
   (a) 3 bis 50 Gewichtsanteile (phr) eines oder mehrerer Ethylen-Copolymere aus der Gruppe der Ethylenvinylacetate, der Ethylenethylacrylate, der Ethylenmethylacrylate oder Ethylenbutylacrylate
die Kunststoff-Komponente
   (b) 30 bis 96 Gewichtsanteile (phr) eines HDPE (High Density Polyethylene) mit einer Dichte > 0,94 g/cm³,
und als Kompatibilisator die weitere Kunststoff-Komponente
   (c) 1 bis 20 Gewichtsanteile (phr) eines mit einem Derivat einer ungesättigten Carbonsäure gegrafteten HDPE, (HDPE-g-Carbonsäurederivat),
      wobei die Komponenten (a) bis (c) zusammen 100 Gewichtsanteile Kunststoff (phr) ergeben
      und umfassend die weiteren Komponenten
   (d) 40 bis 250 Gewichtsanteile (phr) eines Füllstoffs,
   (e) 0,1 bis 15 Gewichtsanteile (phr) eines Stabilisatorsystems.

Die Kunststoff-Komponente (a), das Ethylen-Copolymer weist einen Comonomergehalt vorzugsweise zwischen 8 und 30 % auf und enthält ein oder mehrere Sauerstoffatome.

### Bevorzugte Ethylen-Copolymere sind:

EVA (Ethylenvinylacetat), EEA (Ethylenethylacrylat), EMA (Ethylenmethylacrylat) oder EBA (Ethylenbutylacrylat) oder Mischungen aus diesen.

Die Kunststoff-Komponente (b), das HDPE mit der Dichte > 0,94 hat vorzugsweise eine Dichte ≥ 0,945 g/cm³. Gute Ergebnisse wurden z.B. mit einem HDPE mit einer Dichte von 0,958 g/cm³ erzielt. Ein solches HDPE zeichnet sich durch seine besondere Polymerstruktur (Kristallinität etc.) aus.

Die Verwendung eines LLDPE als Ersatz für die HDPE-Komponente kommt nicht in Betracht, auch wenn die Dichte eines LLDPE an die Dichte eines HDPE herankommt. Die Nichtaustauschbarkeit, liegt in der bereits erwähnten Polymerstruktur begründet.

Die Kunststoff-Komponente (c ), das mit einem Derivat einer ungesättigten Carbonsäure gegraftete HDPE dient der Verbesserung der Polymer-Kompatibilität bzw. der Polymer-Füllstoffkompatibilität. Das Derivat der ungesättigten Carbonsäure ist dabei vorzugsweise ein Maleinsäureanhydrid.

Die vernetzbare, halogenfrei flammgeschützte Kunststoffmischung wird anteilsmäßig so abgestimmt, daß die Komponenten (a) bis (c) zusammen 100 Gewichtsanteile Kunststoff ergeben. Diesen auf 100 Gewichtsanteilen normierten Kunststoffmischungen werden weiter die Komponente (d), der Füllstoff, mit 40 - 250 Gewichtsanteilen zugegeben. Bei dem Füllstoff handelt es sich um ein Metallhydroxid oder um eine Mischung von Metallhydroxiden mit CaCO₃.

Weiterhin zugegeben wird die Komponente (e), das ausgewogene Stabilisatorsystem mit einem Gewichtsanteil bis 20 phr. Die Zusammensetzung des Stabilisatorsystems in der Kunststoffmischung enthält ein primäres phenolisches Antioxidanz, ein sekundäres Antioxidanz mit einer Phosphor- oder einer Schwefelverbindung, einen Metalldesaktivator, einen gehinderten aminischen Lichtstabilisator (HALS) und Calciumstearat. Die Anteile dieser Komponenten am Stabilisatorsystem (e) sind dabei:
- phenolisches primäres Antioxidanz 0,1 bis 6,0 Gewichtsanteile, vorzugsweise jedoch 0,3 bis 3,0 Gewichtsanteile,
- sekundäres Antioxidanz 0 bis 12,0 Gewichtsanteile, vorzugsweise 0,3 bis 6 Gewichtsanteile,
- Metalldesaktivator 0,1 bis 6,0 Gewichtsanteile, vorzugsweise 0,6 bis 3,0 Gewichtsanteile,
- aminischer Lichtstabilisator 0,1 bis 3,0 Gewichtsanteilen, vorzugsweise 0,6 bis 1,5 Gewichtsanteile,
- Calciumstearat 0 bis 3,0 Gewichtsanteile, vorzugsweise 0,1 bis 0,5 Gewichtsanteile,
- aromatisches Polycarbodiimid 0 bis 6,0 Gewichtsanteile vorzugsweise 2 bis 4 Gewichtsanteile.

Zu bemerken ist hierbei, daß bei geeigneter Wahl des aminischen Lichtstabilisators das primäre Antioxidanz teilweise oder auch ganz aus dem Stabilisatorsystem entfallen kann. Der Anteil des aminischen Lichtstabilisators würde sich dann gegebenenfalls noch erhöhen.

Die Stabilisator-Komponenten dienen insbesondere der thermischen Stabilisierung während des Compoundierschrittes und der Extrusion, während der Strahlenvernetzung, sowie der Luftalterung und der Medienbeständigkeit der vernetzten Kabelisolierung. Unter Medienbeständigkeit ist die mechanische Beständigkeit nach Lagerung einer Kabelprobe in verschiedenen Kraftstoffen, Ölen, Säuren oder Laugen oder allgemein in solchen Flüssigkeiten zu verstehen, die typischerweise in Automobilen verwendet werden. Ferner wurde gefunden, daß das Stabilisatorsystem ebenfalls einen Einfluß auf die Kabelabriebeigenschaften hat. Zusätzlich zu dem aufgeführten Stabilisatorsystem kann auch noch ein Vernetzungs-Hilfsmittel, wie z.B. Triallylcyanurat, der Kunststoffmischung beigegeben werden. Das Vernetzungshilfsmittel dient dabei als Aktivator für den Vernetzungsprozeß, der entweder über energiereiche Strahlen oder mittels zusätzlicher peroxidischer Vernetzungsadditive erfolgt, wie z.B. Dicumylperoxid.

Die Kunststoffmischung kann ferner noch ein synergistisch wirkendes Additiv, welches insbesondere eine Silicium- und/oder Borverbindung enthält, enthalten. Die synergistische Wirkung dieses Additivs bezieht sich dabei insbesondere auf den flammhemmenden Füllstoff. Ferner kann die Kunststoffmischung Hilfsmittel für die Verarbeitbarkeit (insbesondere Extrudierbarkeit) enthalten (z.B. Fettsäure oder Polyethylenwachs).

Die Angabe "halogenfrei" im Sinne der vorliegenden Erfindung bedeutet, daß die Kunststoffmischung keine über Verunreinigungen hinausgehenden Mengen an Halogenen enthält.

Gemäß Anspruch 2 kann die erfindungsgemäße Kunststoffmischung 10 bis 40 Gewichtsanteile des Ethylen-Copolymers, 87 bis 50 Gewichtsanteile eines Polyolefins hoher Dichte, insbesondere eines HDPE, 3 bis 10 Gewichtsanteile eines mit einem Derivat einer ungesättigten Carbonsäure gegrafteten Polyolefins, 60 bis 150 Gewichtsanteile eines Füllstoffs und 0,3 bis 15 Gewichtsanteile eines Stabilisatorsystems enthalten.

Das Carbonsäurederivat ist vorzugsweise Maleinsäureanhydrid, durch welches eine intensive Verbindung zwischen Matrix und Füllstoff einerseits und zwischen den unterschiedlichen Polymeren andererseits gewährleistet wird.

Der Füllstoff gemäß Komponente (d) ist vorzugsweise aus der Gruppe der Magnesiumhydroxide und/oder der Aluminiumhydroxide, insbesondere MDH und/oder ATH. Zusätzlich zu den genannten Metallhydroxiden kann dem Füllstoff auch noch Calciumcarbonat (CaCO₃) zugesetzt werden.

Die genannten Metallhydroxide können auch beschichtet sein, z.B. durch Silane, Zirconate oder Titanate oder durch solche Spezialbeschichtungen, wie sie in PCT/EP99/06809, PCT/EP96/00743 oder EP0426196B1 beschrieben sind.

Vorzugsweise kann es sich bei dem verwendeten Magnesiumhydroxid um synthetisches Magnesiumhydroxid handeln. Dieses schließt natürlich nicht aus, daß auch natürliches Magnesiumhydroxid, und/oder synthetisches Aluminiumhydroxid verwendet werden kann.

Gute Ergebnisse bezüglich der Flammwidrigkeit und Abriebfestigkeit wurden erzielt mit Metallhydroxiden, wie z.B. Magnesiumhydroxide und/oder Aluminiumhydroxiden, die einen mittleren Teilchendurchmesser (d50-Wert) von 0,1 bis 5 µm aufweisen. Die verwendeten Magnesiumhydroxide und/oder die Aluminiumhydroxide weisen vorzugsweise eine BET-Oberfläche < 30 m²g, vorzugsweise aber < 15 m²/g auf.

Durch die Zugabe einer Komponente (f) in den Anteilen 1 bis 20 phr, vorzugsweise 3 bis 12 phr, die einen Ethylenoctencopolymer, oder einen Ethylenhexencopolymer, oder einen Ethylenbutencopolymer umfasst, wird eine erhöhte Flexibilität des aus dem Compound extrudierten Kabels erreicht.

Die erfindungsgemäßen Kunststoffmischungen können in an sich bekannter Weise durch Mischen der einzelnen Komponenten erhalten werden. Die Kunststoffmischung kann vorzugsweise durch Mischung der Komponenten in einem Buss Ko-Kneter, in einem Zweischnecken-Kneter oder in einem Innenmischer erhalten werden. Den Knetern ist nach der Erstellung der Kunststoffmischung ein Granulat zu entnehmen, welches zur Herstellung der elektrischen und/oder optischen Kabel und Leitungen, die erfindungsgemäß aus der Kunststoffmischung herzustellen sind, verwendet werden. Hierzu können Extrusionsverfahren verwendet werden, bei denen der optisch oder elektrisch aktive Metall- oder Glasfaserkern eines Kabels direkt mit einer Kabelhülle aus der erfindungsgemäßen Kunststoffmischung umgeben wird.

Kabel und Leitungen, die mit der erfindungsgemäßen, vernetzten Kunststoffmischung als Hüllmaterial umgeben sind, sind hochgradig flammwidrig und weisen eine exzellente Abriebfestigkeit, auch bei kleinsten Kabeldurchmessern bzw. Isolationsstärken, auf.

Neben den guten Abriebseigenschaften und der hohen Flammwidrigkeit weisen die erfindungsgemäßen vernetzten Kunststoffmischungen und die daraus hergestellten erfindungsgemäßen Kabel auch sehr gute mechanische Eigenschaften auf, wie sie mit dem Kältewickeltest und dem Test zur Reißdehnung ermittelt werden konnten.

In den nachstehenden Beispielen wird die folgende Erfindung verdeutlicht.

### Beispiel 1

Eine Kunststoffmischung wurde aus 30 Gewichtsanteilen EVA (mit Gewichtsanteil VA von 12 %), 65 Gewichtsanteilen HDPE (Dichte 0,945), 5 Gewichtsanteilen HDPE-g-MAH (mit Maleinsäureanhydrid gegraftetes HDPE) und 100 Gewichtsanteilen MDH (eines beschichteten MDH der Firma alusuisse martinswerk gmbh), 0,3 Gewichtsanteile eines Metalldesaktivators, 0,15 Gewichtsanteile einer phenolischen primären Antioxidanz, 0,15 Gewichtsanteile einer sekundären Antioxidanz, und 2,0 Gewichtsanteile eines Vernetzungsaktivators hergestellt. Dazu werden zunächst die Kunststoffkomponenten in üblicher Weise zusammen mit dem Stabilisatorsystem und dem Vernetzungsaktivator miteinander vorgemischt, und das fertige Gemisch zusammen mit 50 % des Füllstoffes in einen Buss Ko-Kneter über die erste Einlaufschnecke mittels zweier gravimetrischer Dosierwaagen zugegeben. Über die zweite Einlaufschnecke wurde die zweite Tranche des Füllstoffs (50 % von 100 Gewichtsanteilen) mit einer weiteren Dosierwaage zugegeben, und es wurde in üblicher Weise nach dem Austrag über einen Austragsextruder mit Vorkopfgranulierung ein Granulat hergestellt und getrocknet. Mit diesem Granulat wurde ein Kabel mit einem Gesamtdurchmesser von 1,2 mm extrudiert, welches einen Kupferleiter von 0,35 mm² beinhaltete. Das auf diese Weise hergestellte Kabel wurde anschließend mittels energiereicher Strahlen vernetzt und folgenden Tests unterzogen:

### 1. Abriebtest

Hierzu wurde eine Apparatur benutzt, in der ein Kabelstück mit einer Länge von etwa 140 mm mittels geeigneter Halterungen so eingespannt werden kann, daß etwa 70 mm aus dem Mittelbereich des Kabelstücks auf einer Unterlage glatt aufliegt. In diesem Bereich wird eine Metallnadel (Material nach ISO 8458-2) mit einem Durchmesser von 0,45 mm senkrecht auf das Kabelstück angesetzt. Die Nadel wird mit einer Kraft von 7 ± 0,05 N beaufschlagt und mittels einer Führungsvorrichtung längs über die Kabelprobe gezogen. Der Nadelhub beträgt dabei 20 mm. Die Frequenz dieser Nadelbewegung beträgt 55 ± 5 Zyklen/min, wobei ein Zyklus eine Hin- und Her-Bewegung der Nadel über das Kabelstück darstellt. Der Test wird automatisch beendet, wenn die Nadel den Leiter des Kabelstückes berührt. Die Messung wird viermal bei Raumtemperatur durchgeführt und der Mittelwert angegeben.

### 2. Flammwidrigkeitstest

Hierzu wurde ein Kabelstück mit einer mindestens 600 mm langen Isolierung unter einem Winkel von 45° an einer Halterung befestigt. Ein mit Gas betriebener Bunsenbrenner mit einem inneren Durchmesser von 9 mm wurde so eingestellt, daß seine Flammenlänge insgesamt 100 mm und der in der Flamme befindliche blaue Flammkegel 50 mm Länge aufwies. Der Bunsenbrenner wird von unten so an die Kabelprobe herangeführt, daß er mit dem Kabel einen Winkel von 90° bildet und daß die Spitze des blauen Flammkegels das Kabel berührt. Der Berührungspunkt ist dabei 500 mm weit von der oberen Isolierung entfernt. Die Beflammung erfolgt während 5 s, höchstens jedoch so lange, bis der Leiter sichtbar wird.

### 3. Kältewickeltest

Der Test wurde in dem Fachmann üblicher Weise nach DIN 72551 Teil 5.3.6.3 bei -40° Celsius durchgeführt.

### 4. Reißdehnungstest

Der Test wurde in dem Fachmann bekannter üblicher Weise nach DIN-VDE 0472, Teil 602, an der Kabelisolation entnommenen Prüflingen durchgeführt.

In der nachfolgenden Tabelle 1 sind die Ergebnisse der durchgeführten Tests aufgeführt.

**Tabelle 1**

| Abrieb Target: >200 Zyklen | Flammwidrigkeit (s) Target: <30 s | Kältewickeltest bei -40 °C | Reißdehnung (%) |
|---|---|---|---|
| 336 | 13 | bestanden | 165 |

### Beispiel 2

Eine Kunststoffmischung aus 30 Gewichtsanteilen EVA (mit Gewichtsanteil VA von 12 %), 65 Gewichtsanteilen HDPE, 5 Gewichtsanteilen HDPE-g-MAH und 100 Gewichtsanteilen MDH (eines beschichteten MDH der Firma alusuisse martiswerk gmbh), 0,5 Gewichtsanteile einer phenolischen primären Antioxidanz, 0,6 Gewichtsanteile eines aminischen Lichtstabilisators, 0,6 Gewichtsanteile eines Metalldesaktivators und 0,2 Gewichtsanteile Calciumstearat und 2,0 Gewichtsanteile eines Vernetzungsaktivators wurden in der aus Bespiel 1 bekannten Weise zu einem Granulat verarbeitet und mit diesem Granulat ein durch energiereiche Strahlung vernetztes Kabel von 1,2 mm Durchmesser mit einem 0,35 mm² Kupferleiterkern hergestellt. Dieses Kabel wurde wiederum den bereits beschriebenen Tests unterzogen. Die Ergebnisse der durchgeführten Tests sind in Tabelle 2 wiedergegeben.

**Tabelle 2**

| Abrieb Target: >200 Zyklen | Flammwidrigkeit (s) Target: <30 s | Kältewickeltest bei-40° C | Reißdehnung (%) |
|---|---|---|---|
| 717 | 14 | Bestanden | 130 |

Wie aus den Beispielen ersichtlich, zeigen die mit der erfindungsgemäßen Kunststoffmischung hergestellten Kabel Abriebe, die deutlich über die vorausgesetzte Mindesthubzahl von 200 hinausgehen. Ferner ist die Flammwidrigkeit deutlich unter der gesteckten Minimalanforderung von 30 Sekunden. Auch die mechanischen Eigenschaften der erfindungsgemäßen compoundierten Kunststoffmischung sind sehr gut.

Aus einem Vergleich von Beispiel 1 mit Beispiel 2 wird der Einfluß eines abgestimmten Stabilisatorsystems gemäß Anspruch 11 auf den Abrieb deutlich. Dieser ließ sich von 336 auf 717 Zyklen von Beispiel 1 nach Beispiel 2 steigern. Der Abriebwert steigt von 336 auf 717 Zyklen.

## Patentansprüche

1. Vernetzbare, halogenfrei flammgeschützte Kunststoffmischung, insbesondere für Kabel, umfassend
die Kunststoff-Komponente
(a) 3 bis 50 Gewichtsanteile (phr) wenigstens eines Ethylen-Copolymers aus der Gruppe der Ethylenvinylacetate, der Ethylenethylacrylate, der Ethylenmethylacrylate oder Ethylenbutylacrylate,
die Kunststoff-Komponente
(b) 30 bis 96 Gewichtsanteile (phr) eines HDPE (High Density Polyethylene) mit einer Dichte > 0,94 g/cm³
und als Kompatibilisator die weitere Kunststoff-Komponente
(c) 1 bis 20 Gewichtsanteile (phr) eines mit einem Derivat einer ungesättigten Carbonsäure gegrafteten HDPE (HDPE-g-Carbonsäurederivat),
wobei die Komponenten (a) bis (c) zusammen 100 Gewichtsanteile Kunststoff (phr) ergeben,
und umfassend die weiteren Komponenten
(d) 40 bis 250 Gewichtsanteile (phr) eines Füllstoffs und
(e) bis zu 20 phr eines Stabilisatorsystems, welches
- phenolisches primäres Antioxidanz in den Anteilen zwischen 0,1 bis 6,0 phr, vorzugsweise zwischen 0,3 bis 3 phr,
- sekundäres Antioxidanz in den Anteilen zwischen 0 bis 12,0 phr, vorzugsweise 0,3 bis 6 phr,
- einen Metalldesaktivator in den Anteilen zwischen 0,1 bis 6,0 phr, vorzugsweise 0,6 bis 3,0 phr,
- einen aminischen Lichtstabilisator in den Anteilen zwischen 0,1 bis 3 phr, vorzugsweise zwischen 0,6 bis 1,5 phr,
- Calciumstearat in den Anteilen zwischen 0 bis 3 phr, vorzugsweise zwischen 0,1 bis 0,5 phr,
- ein aromatisches Polycarbodiimid in den Anteilen zwischen 0 bis 6,0 phr, vorzugsweise zwischen 2 bis 4 phr,
enthält.

2. Vernetzbare, halogenfrei flammgeschützte Kunststoffmischung nach Anspruch 1, **dadurch gekennzeichnet, dass** die Komponenten (a), (b), (c), (d) und (e) in den Anteilen
(a) 10 bis 40 phr,
(b) 87 bis 50 phr,
(c) 3 bis 10 phr,
(d) 60 bis 150 phr,
(e) 0.3 bis 15 phr
in der Mischung enthalten sind.

3. Vernetzbare, halogenfrei flammgeschützte Kunststoffmischung nach Anspruch 1 oder 2, **dadurch gekennzeichnet, dass** das Carbonsäurederivat Maleinsäureanhydrid ist.

4. Vernetzbare, halogenfrei flammgeschützte Kunststoffmischung nach einem der Ansprüche 1 bis 3, **dadurch gekennzeichnet, dass** die Komponente (d) einen Füllstoff aus der Gruppe der Magnesiumhydroxide und/oder der Aluminiumhydroxide, insbesondere MDH (Magnesiumdihydroxid) und/oder ATH (Aluminiumtrihydroxid) umfaßt.

5. Vernetzbare, halogenfrei flammgeschützte Kunststoffmischung nach einem der Ansprüche 1 bis 4, **dadurch gekennzeichnet, dass** die Komponente (d) beschichtete Magnesiumhydroxide und/oder Aluminiumhydroxide umfasst.

6. Vernetzbare, halogenfrei flammgeschützte Kunststoffmischung nach einem der Ansprüche 1 bis 5, **dadurch gekennzeichnet, dass** das Magnesiumhydroxid synthetisches MDH ist.

7. Vernetzbare, halogenfrei flammgeschützte Kunststoffmischung nach einem der Ansprüche 1 bis 6, **dadurch gekennzeichnet, dass** die Magnesiumhydroxide und/oder die Aluminiumhydroxide einen mittleren Teilchendurchmesser (d₅₀-Wert) von 0,1 - 5 µm aufweisen.

8. Vernetzbare, halogenfrei flammgeschützte Kunststoffmischung nach einem der Ansprüche 1 bis 6, **dadurch gekennzeichnet, dass** die Magnesiumhydroxide und/oder die Aluminiumhydroxide eine BET-Oberfläche < 30 m²/g, vorzugsweise < 15m²/g aufweisen.

9. Vernetzbare, halogenfrei flammgeschützte Kunststoffmischung nach einem der Ansprüche 1 bis 8, **dadurch gekennzeichnet, dass** in dem Stabilisatorsystem (e)
- das phenolisch primäre Antioxidanz in den Anteilen zwischen 0,1 bis 3,0 phr, vorzugsweise zwischen 0,3 bis 1,5 phr,
- das sekundäre Antioxidanz in den Anteilen zwischen 0 bis 3,0 phr, vorzugsweise zwischen 0,3 bis 1,5 phr,
- der Metalldesaktivator in den Anteilen zwiscehn 0,1 bis 3,0 phr, vorzugsweise zwischen 0,6 bis 1,5 phr,
- der aminische Lichtstabilisator in den Anteilen zwischen 0,1 bis 3,0 phr, vorzugsweise zwischen 0,6 bis 1,5 phr,
- das Calciumstearat in den Anteilen zwischen 0 und 3 phr, vorzugsweise zwischen 0,1 und 0,5 phr, vorhanden ist.

10. Vernetzbare, halogenfrei flammgeschützte Kunststoffmischung nach einem der Ansprüche 1 bis 9, **dadurch gekennzeichnet, dass** die Kunststoffmischung als Kabel extrudiert wird, und in dem Kabel wenigstens ein metallischer Leiter und/oder wenigstens ein Glasfaserleiter angeordnet ist.

11. Vernetzbare, halogenfrei flammgeschützte Kunststoffmischung nach einem der Ansprüche 1 bis 10, **dadurch gekennzeichnet, dass** diese eine weitere Komponente (f) in den Anteilen 1 bis 20 phr, vorzugsweise 3 bis 12 phr enthält,
wobei die Komponente (f) einen Ethylenoctencopolymer oder einen Ethylenhexencopolymer oder einen Ethylenbutencopolymer umfasst.

## Claims

1. Cross-linkable zero halogen flame-retardant plastic compound, particularly for use in cables and comprising:
plastic components:
(a) between 3 and 50 parts by weight (phr) of at least one ethylene copolymer from the ethylene vinyl acetate, ethylene ethyl acrylate, ethylene methyl acrylate or ethylene butyl acrylate group,
plastic components:
(b)between 30 and 96 parts by weight (phr) of HDPE (high density polyethylene) having a density > 0.94 g/cm³
and as compatibilizer the additional plastic components:
(c) between 1 and 20 parts by weight (phr) of an HDPE grafted with an unsaturated carboxylic acid (HDPE-g-carboxylic acid),
whereby components (a) to (c) together comprise 100 parts by weight
and comprising additional components:
(d)40 to 250 parts by weight (phr) of a filler and
(e) up to 20 phr of a stabilizer system containing
- phenolic primary antioxidance in proportions between 0.1 and 6.0 phr, preferably between 0.3 and 3 phr
- secondary oxidance in proportions between 0 and 12.0 phr, preferable 0.3 to 6 phr
- a metal deactivator in proportions between 0.1 and 6.0 phr, preferably 0.6 to 3.0 phr
- an aminic light stabiliser in proportions between 0.1 and 3 phr, preferably between 0.6 and 1.5 phr
- calcium stearate in proportions between 0 and 3 phr, preferably between 0.1 and 0.5 phr
- an aromatic polycabodiimide in proportions between 0 and 6.0 phr, preferably between 2 and 4 phr.

2. Cross-linkable, zero halogen flame-retardant plastic compound as per Claim 1 **characterised by** the fact that components (a), (b), (c), (d) and (e) are contained in the compound in the proportions:
(a) 10 to 40 phr,
(b) 87 to 50 phr,
(c) 3 to 10 phr
(d) 60 to 150 phr
(e) 0.3 to 15 phr

3. Cross-linkable, zero halogen flame-retardant plastic compound in accordance with Claim 1 or 2 **characterised by** the fact that the carboxylic acid derivative is malein acid anydrid.

4. Cross-linkable, zero halogen flame-retardant plastic compound in accordance with any one of Claims 1 to 3 **characterised by** the fact that component (d) includes a filler from the magnesium hydroxide and/or aluminium hydroxide group, in particular MDH (magnesium dihydroxide) and/or ATH (aluminium trihydroxide).

5. Cross-linkable, zero halogen flame-retardant plastic compound in accordance with any one of Claims 1 to 4 **characterised by** the fact that component (d) includes coated magnesium hydroxides and/or aluminium hydroxides.

6. Cross-linkable, zero halogen flame-retardant plastic compound in accordance with any one of Claims 1 to 5 **characterised by** the fact that the magnesium hydroxide is synthetic MDH.

7. Cross-linkable, zero halogen flame-retardant plastic compound in accordance with any one of Claims 1 to 6 **characterised by** the fact that the magnesium hydroxides and/or the aluminium hydroxides have an average particle diameter (d₅₀ value) of between 0.1 and 5 µm.

8. Cross-linkable, zero halogen flame-retardant plastic compound in accordance with any one of Claims 1 to 6 **characterised by** the fact that the magnesium hydroxides and/or the aluminium hydroxides have a BET surface area < 30 m²/g, preferably <15m²/g.

9. Cross-linkable, zero halogen flame-retardant plastic compound in accordance with any one of claims 1 to 8 **characterised by** the fact that the stabilizer system (e) contains
- the phenolic primary antioxidance in proportions between 0.1 to 3.0 phr, preferably between 0.3 and 1.5 phr,
- the secondary oxidance in proportions between 0 and 3.0 phr, preferably between 0.3 and 1.5 phr
- the metal deactivator in proportions between 0.1 and 3.0 phr, preferably between 0.6 and 1.5 phr
- the aminic light stabiliser in proportions between 0.1 to 3.0 phr, preferably between 0.6 and 1.5 phr
- the calcium stearate in proportions between 0 and 3 phr, preferably between 0.1 and 0.5 phr.

10. Cross-linkable, zero halogen flame-retardant plastic compound in accordance with any one of claims 1 to 9 **characterised by** the fact that the plastic cable can be extruded as a cable and that in the cable at least one metal conductor an/or at least one glass fibre conductor is accommodated.

11. Cross-linkable, zero halogen flame-retardant plastic compound in accordance with any one of Claims 1 to 10 **characterised by** the fact that the latter contains an additional component (f) in proportions of 1 to 20 phr, preferably 3 to 12 phr and whereby component (f) includes an ethylene-octene copolymer or and ethylene-hexane copolymer or an ethylene-butene copolymer.

## Revendications

1. Mélange de matières plastiques, réticulable, non halogéné et ignifugé, en particulier pour câbles, comprenant
le composant matière plastique
(a) 3 à 50 parties en poids (phr) d'au moins un copolymère de l'éthylène choisi dans le groupe des éthylène-acétates de vinyle, des éthylène-acrylates de vinyle, des éthylène-acrylates de méthyle ou des éthylène-acrylates de butyle,
le composant matière plastique
(b) 30 à 96 parties en poids (phr) d'un PEHD (polyéthylène haute densité) ayant une masse volumique > 0,94 g/cm³,
et en tant que compatibilisateur l'autre composant matière plastique
(c) 1 à 20 parties en poids (phr) d'un PEHD greffé par un dérivé d'un acide carboxylique insaturé (dérivé PEHD-g-acide carboxylique),
la somme des composants (a) à (c) faisant en tout 100 parties en poids de matière plastique (phr),
et comportant les autres composants :
(d) 40 à 250 parties en poids (phr) d'une matière de charge, et
(e) jusqu'à 20 phr d'un système stabilisant qui contient
- un antioxydant primaire phénolique en une proportion de 0,1 à 6,0 phr et de préférence de 0,3 à 3 phr,
- un antioxydant secondaire, en une proportion comprise entre 0 et 12,0 phr, de préférence entre 0,3 et 6 phr,
- un désactivateur de métaux, en une proportion comprise entre 0,1 et 6,0 phr, de préférence entre 0,6 et 3,0 phr,
- un photostabilisant aminé, en une proportion comprise entre 0,1 et 3 phr, de préférence entre 0,6 et 1,5 phr,
- du stéarate de calcium en une proportion comprise entre 0 et 3 phr, de préférence entre 0,1 et 0,5 phr,
- un polycarbodiimide aromatique en une proportion comprise entre 0 et 6,0 phr, de préférence entre 2 et 4 phr.

2. Mélange de matières plastiques, réticulable, non halogéné et ignifugé selon la revendication 1, **caractérisé en ce que** les composants (a), (b), (c), (d) et (e) sont contenus dans le mélange selon les proportions suivantes :
(a) 10 à 40 phr,
(b) 87 à 50 phr,
(c) 3 à 10 phr,
(d) 60 à 150 phr,
(e) 0,3 à 15 phr.

3. Mélange de matières plastiques, réticulable, non halogéné et ignifugé selon la revendication 1 ou 2, **caractérisé en ce que** le dérivé d'acide carboxylique est l'anhydride maléique.

4. Mélange de matières plastiques, réticulable, non halogéné et ignifugé selon l'une des revendications 1 à 3, **caractérisé en ce que** le composant (d) comprend une matière de charge choisie dans le groupe des hydroxydes de magnésium et/ou des hydroxydes d'aluminium, en particulier le MDH (dihydroxyde de magnésium) et/ou l'ATH (trihydroxyde d'aluminium).

5. Mélange de matières plastiques, réticulable, non halogéné et ignifugé selon l'une des revendications 1 à 4, **caractérisé en ce que** le composant (d) comprend des hydroxydes de magnésium et/ou des hydroxydes d'aluminium enduits.

6. Mélange de matières plastiques, réticulable, non halogéné et ignifugé selon l'une des revendications 1 à 5, **caractérisé en ce que** l'hydroxyde de magnésium est un MDH synthétique.

7. Mélange de matières plastiques, réticulable, non halogéné et ignifugé selon l'une des revendications 1 à 6, **caractérisé en ce que** les hydroxydes de magnésium et/ou les hydroxydes d'aluminium ont une granulométrie moyenne (d₅₀) de 0,1-5 µm.

8. Mélange de matières plastiques, réticulable, non halogéné et ignifugé selon l'une des revendications 1 à 6, **caractérisé en ce que** les hydroxydes de magnésium et/ou les hydroxydes d'aluminium ont une aire BET < 30 m²/g et de préférence < 15 m²/g.

9. Mélange de matières plastiques, réticulable, non halogéné et ignifugé selon l'une des revendications 1 à 8, **caractérisé en ce qu'**on a dans le système catalyseur (e)
- l'antioxydant primaire phénolique en une proportion comprise entre 0,1 et 3,0 phr, de préférence entre 0,3 et 1,5 phr,
- l'antioxydant secondaire en une proportion comprise entre 0 et 3,0 phr, de préférence enter 0,3 et 1,5 phr,
- le désactivateur de métaux en une proportion comprise entre 0,1 et 3,0 phr, de préférence entre 0,6 et 1,5 phr,
- le photostabilisant aminé en une proportion comprise entre 0,1 et 3,0 phr, de préférence entre 0,6 et 1,5 phr,
- le stéarate de calcium en une proportion comprise entre 0 et 3 phr, de préférence entre 0,1 et 0,5 phr.

10. Mélange de matières plastiques, réticulable, non halogéné et ignifugé selon l'une des revendications 1 à 9, **caractérisé en ce que** le mélange de matière plastique est extrudé sous forme d'un câble, au moins un conducteur métallique et/ou au moins un conducteur en fibres de verre étant disposés dans le câble.

11. Mélange de matières plastiques, réticulable, non halogéné et ignifugé selon l'une des revendications 1 à 10, **caractérisé en ce qu'**il contient un autre composant (f), en une proportion de 1 à 20 phr et de préférence de 3 à 12 phr, le composant (f) comprenant un copolymère éthylène-octène ou un copolymère éthylène-hexène ou un copolymère éthylène-butène.
